# FASCICULE DE BREVET EUROPEEN

(11) **EP 0 574 281 B1**
(45) Date de publication et mention de la délivrance du brevet: **25.10.1995**
(21) Numéro de dépôt: 93401285.7
(22) Date de dépôt: 18.05.1993
(51) Int. Cl.: B60K 1/04, B60R 16/04, B62D 21/15, H01M 2/10

(54) **Véhicule automobile à propulsion électrique dont la carrosserie peut être dérivée, avec très peu de modifications, de la carrosserie d'un véhicule de base à moteur thermique**
Kraftfahrzeug mit elektrischem Antrieb, dessen Karrosserie mit sehr wenigen Änderungen von der Karrosserie eines Fahrzeuges mit Brennkraftmaschine abgeleitet ist
Motor vehicle with electric propulsion with a body which is derived with very few modifications from the body of a vehicle with combustion engine

(30) Priorité: 11.06.1992 FR 9207052
(43) Date de publication de la demande: 15.12.1993
(73) Titulaire: AUTOMOBILES PEUGEOT, 75116 Paris (FR); AUTOMOBILES CITROEN, 92200 Neuilly-sur-Seine (FR)
(72) Inventeur: Cornu, François, FR-95240 Cormeilles en Parisis (FR)
(74) Mandataire: Gendraud, Pierre

(56) Documents cités:
- WO-A-91/14110
- FR-A- 1 421 447
- FR-A- 2 311 673
- US-A- 2 849 074

## Description

L'invention concerne un véhicule automobile à propulsion électrique dont la structure de carrosserie peut être dérivée, avec très peu de modifications, de la structure de carrosserie d'un véhicule de base à moteur thermique.

Les batteries d'accumulateurs électriques destinées à la propulsion ne peuvent pas être constituées de blocs dispersés à différents emplacements du véhicule afin de ne pas rencontrer des problèmes difficiles de connexion pour assurer la mise en série de ces blocs, et des problèmes de perturbations électromagnétiques et de sécurité. On groupe donc habituellement les batteries en un minimum de blocs, si possible un seul, ce qui conduit à prévoir des structures particulières pour absorber l'énergie lors d'un choc accidentel car le bloc de batteries est pratiquement indéformable et ne peut donc lui-même absorber beaucoup d'énergie.

Ce problème est particulièrement difficile à résoudre lorsque le véhicule électrique doit être dérivé d'un modèle dont les versions de base sont propulsées par un moteur thermique.

Les solutions connues imposent des contraintes de style et/ou de structure de carrosserie très contraignantes en coût et en masse tant pour le véhicule de base que pour le véhicule électrifié.

Dans le cas de l'implantation du bloc de batteries à l'arrière du véhicule, par exemple sous le coffre à bagages, l'énergie à absorber lors d'un choc frontal, très supérieure à celle du véhicule thermique, conduit à augmenter la zone d'écrasement disposée à l'avant du véhicule afin de conserver une décélération compatible avec la survie des occupants.

Ceci entraîne des contraintes de structure se répercutant sur l'aspect du véhicule.

L'invention a donc pour objet un véhicule automobile à propulsion électrique du type comportant un bloc de batteries d'accumulateurs disposé dans un compartiment situé de préférence à l'arrière du véhicule et ne présentant pas ces inconvénients.

Selon une première caractéristique de l'invention, le bloc de batteries est disposé derrière des moyens de retenue prenant appui sur une poutre longitudinale s'étendant dans l'axe du véhicule sensiblement jusqu'au pare-chocs avant.

La poutre peut être constituée par un tube et disposée dans un tunnel.

Selon une autre caractéristique, la poutre est munie de moyens destinés à amortir les petits chocs.

Selon une caractéristique importante, les moyens de retenue sont fixés à la caisse par des moyens susceptibles de céder lors de la montée des efforts dûs à une forte décélération.

De préférence, les moyens de retenue sont constitués par une plaque verticale et transversale dont une face est en appui sur l'extrémité arrière de la poutre, le bloc de batteries étant disposé en appui contre l'autre face.

Les moyens susceptibles de céder lors d'un choc peuvent être constitués par des équerres reliant chaque coin inférieur de la plaque à la caisse du véhicule.

Selon une autre caractéristique importante, une zone de garantie est ménagée entre la plaque et l'habitacle.

D'autres caractéristiques et avantages de l'invention apparaîtront mieux dans la description détaillée qui suit et se réfère aux dessins annexés donnés uniquement à titre d'exemple, et dans lesquels:
- la Figure 1 est un schéma d'un véhicule conforme à l'invention en vue de dessus;
- la Figure 2 est une vue en coupe selon XX de la figure 1;
- la Figure 3 est une vue perspective à plus grande échelle du bloc de batteries et de ses moyens de retenue.

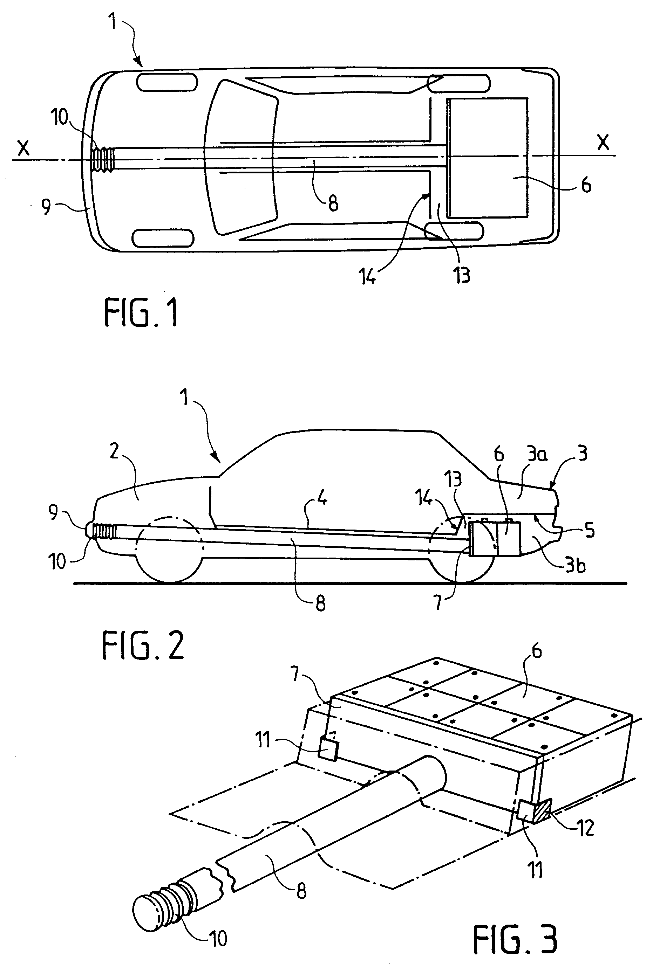

Le véhicule automobile 1 (figures 1 et 2), de forme habituelle, peut être équipé d'un moteur thermique conventionnel disposé à l'avant dans le compartiment moteur 2. Le coffre à bagages 3 est disposé à l'arrière. Le compartiment avant 2 et l'arrière du véhicule sont reliés, de façon habituelle, par un tunnel 4 situé au voisinage de l'axe longitudinal.

Dans la version à propulsion électrique, seule représentée, le coffre à bagages 3 est scindé en deux par un plancher horizontal 5 qui délimite un compartiment supérieur 3a et un compartiment inférieur 3b dans lequel débouche l'arrière du tunnel 4. Le bloc 6 des batteries de propulsion, de forme parallélépipédique, est implanté dans le compartiment 3b en prenant appui, lors des décélérations, sur une plaque verticale 7 disposée perpendiculairement à l'axe longitudinal du véhicule et liée à la caisse comme il sera explicité plus loin.

La plaque 7 prend elle-même appui sur une poutre 8 qui s'etend parallèlement à l'axe longitudinal du véhicule à l'intérieur du tunnel 4. La poutre 8 peut être constituée d'un tube de section préférentiellement circulaire et se prolonge jusqu'au pare-chocs avant 9 au centre duquel elle peut prendre appui.

La poutre 8 peut être munie d'un amortisseur destiné à absorber les petits chocs. Dans l'exemple décrit, cet amortisseur est constitué par l'extrémité annelée 10 du tube 8 prenant appui sur le pare-chocs 9.

Comme on le voit à la figure 3, la plaque 7 n'est rendue solidaire de la caisse que par deux équerres 11 fixées à sa base symétriquement par rapport au plan vertical axial du véhicule. Les équerres 11 peuvent être soit soudées à la caisse par leur face 12, soit fixées par des vis calculées pour être cisaillées à partir d'un seuil de décélération.

Une zone de garantie 13 est ménagée entre la plaque 7 et la zone réservée aux passagers délimitée par une cloison 14 sensiblement verticale.

La longueur de la zone de garantie 13 est sensiblement égale à la capacité de déformation prévue sur la poutre pour les petits chocs.

Lors d'un choc frontal, les batteries 6, la plaque de poussée 7 et la poutre 8 peuvent se désolidariser de la structure du véhicule. Cette désolidarisation se produit par arrachage des butées formées par les équerres 11 du fait de la rigidité de la poutre 8 dont la capacité de déformation pratiquement limitée au dispositif d'amortissement 10 doit être très inférieure à celle de la caisse du véhicule.

Les liaisons des butées 11 à la caisse sont déterminées pour céder dès le commencement de l'écrasement. La caisse du véhicule n'a donc pas à absorber par déformation le supplément d'énergie cinétique apporté par la masse des batteries, ce qui permet de garantir l'intégralité de l'habitacle sans modifications importantes de la caisse du véhicule.

Bien entendu, l'invention ne se limite pas à l'exemple décrit. C'est ainsi que le problème posé et sa solution seraient les mêmes si le bloc de batteries était situé dans un compartiment disposé sous le siège des passagers arrière ou dans la partie médiane du tunnel 4.

## Revendications

1. Véhicule automobile à propulsion électrique du type comportant un bloc (6) de batteries d'accumulateurs électriques disposé dans un compartiment (3), caractérisé en ce que le bloc (6) est disposé derrière des moyens de retenue (7) prenant appui sur une poutre longitudinale (8) s'étendant dans l'axe du véhicule sensiblement jusqu'au pare-chocs avant (9).

2. Véhicule selon la revendication 1, caractérisé en ce que la poutre (8) est constituée par un tube.

3. Véhicule selon les revendications 1 ou 2, caractérisé en ce que la poutre est disposée dans un tunnel (4).

4. Véhicule selon l'une quelconque des revendications précédentes, caractérisé en ce que la poutre (8) est munie de moyens (10) destinés à amortir les petits chocs.

5. Véhicule selon l'une quelconque des revendications précédentes, caractérisé en ce que les moyens de retenue (7) sont fixés à la caisse par des moyens (11) susceptibles de céder lors de la montée des efforts dûs à une forte décélération.

6. Véhicule selon la revendication 5, caractérisé en ce que les moyens de retenue (7) sont constitués par une plaque verticale et transversale dont une face est en appui sur l'extrémité arrière de la poutre (8), le bloc (6) étant disposé en appui contre l'autre face.

7. Véhicule selon la revendication 6, caractérisé en ce que les moyens susceptibles de céder lors d'un choc sont constitués par des équerres (11) reliant chaque coin inférieur de la plaque à la caisse du véhicule.

8. Véhicule selon la revendication 7, caractérisé en ce que les équerres (11) sont soudées à la caisse.

9. Véhicule selon la revendication 7, caractérisé en ce que les équerres (11) sont fixées à la caisse par des vis.

10. Véhicule selon l'une quelconque des revendications 6 à 9, caractérisé en ce qu'une zone de garantie (13) est ménagée entre la plaque (7) et l'habitacle.

## Claims

1. A motor vehicle with electric propulsion of the type comprising a block (6) of electrical accumulator batteries arranged in a compartment (3), characterised in that the block (6) is disposed behind holding means (7) bearing against a longitudinal beam (8) extending along the axis of the vehicle substantially as far as the front bumper (9).

2. A vehicle according to Claim 1, characterised in that the beam (8) is constituted by a tube.

3. A vehicle according to Claims 1 or 2, characterised in that the beam is disposed inside a tunnel (4).

4. A vehicle according to any one of the preceding claims, characterised in that the beam (8) is provided with means (10) intended to damp minor impacts.

5. A vehicle according to any one of the preceding claims, characterised in that the holding means (7) are fastened to the body by means (11) capable of giving way with the increase in efforts caused by a sharp deceleration.

6. A vehicle according to Claim 5, characterised in that the holding means (7) are constituted by a vertical and transverse plate, one face of which bears against the rear extremity of the beam (8), the block (6) being disposed so as to bear against the other face.

7. A vehicle according to Claim 6, characterised in that the means capable of giving way on an impact are constituted by angle irons (11) connecting each lower corner of the plate to the vehicle body.

8. A vehicle according to Claim 7, characterised in that the angle irons (11) are welded to the body.

9. A vehicle according to Claim 7, characterised in that the angle irons (11) are fixed to the body by bolts.

10. A vehicle according to any one of Claims 6 to 9, characterised in that a safety zone (13) is arranged between the plate (7) and the passenger compartment.

## Patentansprüche

1. Kraftfahrzeug mit elektrischem Antrieb vom Typ mit einem Batterienblock (6) von elektrischen Akkumulatoren, der in einem Abteil (3) angeordnet ist, dadurch gekennzeichnet, daß der Block (6) hinter Rückhalteeinrichtungen (7) angeordnet ist, die sich gegen einen Längsbalken (8) abstützen, der sich in der Achse des Kraftfahrzeugs im wesentlichen bis zum vorderen Stoßfänger (9) erstreckt.

2. Fahrzeug nach Anspruch 1, dadurch gekennzeichnet, daß der Balken (8) aus einem Rohr gebildet ist.

3. Fahrzeug nach Anspruch 1 oder 2, dadurch gekennzeichnet, daß der Balken in einem Tunnel (4) angeordnet ist.

4. Fahrzeug nach einem der vorhergehenden Ansprüche, dadurch gekennzeichnet, daß der Balken (8) mit Einrichtungen (10) versehen ist, die dazu dienen, die kleinen Stöße zu dämpfen.

5. Fahrzeug nach einem der vorhergehenden Ansprüche, dadurch gekennzeichnet, daß die Rückhalteeinrichtungen (7) an dem Rahmen oder Chassis durch Einrichtungen (11) befestigt sind, die in der Lage sind, beim Anstieg von Kräften aufgrund einer starken Geschwindigkeitsverzögerung nachzugeben.

6. Fahrzeug nach Anspruch 5, dadurch gekennzeichnet, daß die Rückhalteeinrichtungen (7) aus einer vertikalen und transversalen Platte gebildet werden, von der eine Seite in Anlage gegen das hintere Ende des Balkens (8) ist, wobei der Block (6) in Anlage gegen die andere Seite angeordnet ist.

7. Fahrzeug nach Anspruch 6, dadurch gekennzeichnet, daß die Einrichtungen, die in der Lage sind, bei einem Stoß nachzugeben, durch Winkelbänder (11) gebildet sind, die jeweils jede untere Ecke der Platte mit dem Fahrzeugrahmen verbinden.

8. Fahrzeug nach Anspruch 7, dadurch gekennzeichnet, daß die Winkelbänder (11) an dem Rahmen angeschweißt sind.

9. Fahrzeug nach Anspruch 7, dadurch gekennzeichnet, daß die Winkelbänder (11) am Rahmen mittels Schrauben befestigt sind.

10. Fahrzeug nach einem der Ansprüche 6 bis 9, dadurch gekennzeichnet, daß eine Garantie- oder Sicherheitszone (13) zwischen der Platte (7) und der Fahrgastzelle ausgebildet ist.
